# EUROPÄISCHE PATENTSCHRIFT

(11) **EP 2 205 981 B1**
(45) Veröffentlichungstag und Bekanntmachung des Hinweises auf die Patenterteilung: **06.11.2013**
(21) Anmeldenummer: 08804328.6
(22) Anmeldetag: 17.09.2008
(51) Int. Cl.: G01P 3/36, B65H 61/00, B65H 63/06, G01B 11/04, G01B 11/10, G01S 17/58

(54) **VERFAHREN UND ANORDNUNG ZUR BESTIMMUNG DER GESCHWINDIGKEIT UND/ODER DER LÄNGE EINES LAUFENDEN FADENS**
METHOD AND ARRANGEMENT FOR DETERMINING THE SPEED AND/OR LENGTH OF A RUNNING THREAD
PROCÉDÉ ET DISPOSITIF POUR DÉTERMINER LA VITESSE ET/OU LA LONGUEUR D'UN FIL EN MOUVEMENT

(30) Priorität: 28.09.2007 DE 102007046934; 16.01.2008 DE 102008004731
(43) Veröffentlichungstag der Anmeldung: 14.07.2010
(73) Patentinhaber: Hochschule Niederrhein, 47805 Krefeld (DE); Vienco GmbH, 41238 Mönchengladbach (DE)
(72) Erfinder: HERMANNS, Ferdinand Josef, 41812 Erkelenz (DE); LINDEN, Martin, 47877 Willich-Neersen (DE)
(74) Vertreter: Schrooten, Rolf
(86) Internationale Anmeldenummer: PCT/EP2008/062378
(87) Internationale Veröffentlichungsnummer: WO 2009/043722

(56) Entgegenhaltungen:
- EP-A- 1 521 085
- FR-A- 2 350 581
- JP-A- 5 281 357
- US-A- 5 064 280
- US-B1- 6 242 755

## Beschreibung

Die vorliegende Erfindung betrifft ein Verfahren zum berührungslosen Bestimmen der Geschwindigkeit und/oder der Länge eines laufenden Fadens mittels einer im Fadenlauf einer Textilmaschine angeordneten optischen Sensoreinrichtung nach Anspruch 1.

Aus der DE 103 42 383 A1 sind Verfahren und Anordnungen bekannt, bei denen im Rahmen einer berührungslosen Bestimmung der Geschwindigkeit des laufenden Fadens mittels des Laser-Doppler-Anemometrie-Verfahrens (LDA) von einer Lichtquelle ein Lichtstrahl erzeugt wird, der zumindest teilweise auf den Faden gelenkt und von diesem abgeschattet wird. Der nicht vom Faden abgeschattete Restanteil dieses Laserstrahls wird auf einen optischen Detektor, beispielsweise eine Fotozelle gelenkt, dessen Signale zur Bestimmung des Durchmessers des Fadens elektronisch ausgewertet werden.

Ähnliche Verfahren und Anordnungen sind aus JP 05 281357 und US 5064 280 bekannt.

Moderne Textilmaschinen, beispielsweise zur Erzeugung von Kreuzspulen, sind mit Einrichtungen für die Geschwindigkeitsmessung und die Längenmessung des laufenden Fadens ausgerüstet. Ständig steigende Anforderungen an die Qualität des Garns haben zur Überwachung von Parametern der Garnstruktur wie z.B. dem Garndurchmesser nicht nur an ausgewählten Produktionseinheiten, sondern an jeder einzelnen Produktionseinheit geführt. Die Überwachung des Garndurchmessers und/oder der Garngeschwindigkeit wird insbesondere für die Erkennung von Qualitätsverletzungen eingesetzt, wobei beispielsweise für die Bewertung, ob eine Abweichung vom Sollgarndurchmesser als Garnfehler einzustufen ist, üblicherweise auch die Länge der Abweichung herangezogen wird. Die Ermittlung des genauen Garndurchmessers ist daher ein wesentlicher Bestandteil der Qualitätsüberwachung des Garns.

Weiterhin ist die Garngeschwindigkeit eine signifikante Prozessgröße zur Überwachung des textilen Produktionsprozesses. So ist der Verlauf der Garngeschwindigkeit ein wichtiges Merkmal zur Überwachung der Qualität des textilen Endproduktes. Weicht beispielsweise im Spulprozess der Geschwindigkeitsverlauf signifikant von einem vorgegebenen Verlauf ab, können sich durch sogenannte Trommelwickel erhebliche Qualitätsminderungen oder schlimmstenfalls eine Zerrstörung der Produktionseinheit ergeben.

Der von einem Lasermodul der beispielsweise in der DE 103 42 383 A1 beschriebenen Art erzeugte Laserstrahl weist stets einen gewissen Divergenzwinkel auf, wenn keine speziellen Abhilfemaßnahmen getroffen werden. Dies ist insofern von Nachteil, als hierbei eine exakte Garnposition im Messvolumen sichergestellt sein muss, da sonst das Messverfahren zu ungenau bzw. nicht sicher genug funktioniert. Daher hat der Divergenzwinkel des Laserstrahls einen erheblichen Einfluss auf die Abhängigkeit der Messgenauigkeit von der Positionsgenauigkeit des laufenden Fadens im Messbereich. Dies gilt sowohl für die Durchmessererfassung als auch für die durch das LDA-Verfahren ermittelte Garngeschwindigkeit.

Darüber hinaus muss zu jedem Zeitpunkt sichergestellt werden, dass für eine sichere Erfassung des Garndurchmessers, welche über die Schattenbildung des Fadens erfolgt, der Faden den Laserstrahl gegenüber einer Messeinrichtung nicht vollständig abdeckt.

Aufgabe der vorliegenden Erfindung ist es daher, ein mit geringem Aufwand leicht durchzuführendes, verbessertes optisches Messverfahren der eingangs genannten Art zu schaffen, mit dem die vorgenannten Nachteile vermieden werden und dauerhaft eine zuverlässige und exakte Erfassung der Geschwindigkeit und/oder Länge des Fadens ermöglicht wird.

Diese Aufgabe wird erfindungsgemäß durch ein Verfahren nach Anspruch 1 gelöst. Vorteilhafte Ausgestaltungen und Weiterbildungen der Erfindung ergeben sich aus den abhängigen Ansprüchen.

Wesentlich bei der erfindungemäßen Lösung ist es, dass von einer Laserquelle ein Laserstrahl erzeugt wird, der mittels einer optischen Einrichtung kollimiert und anschließend mittels einer optischen Teil- und Lenk-Einrichtung zur Teilung und Lenkung des Laserstrahls in mindestens zwei kollimierte Teilstrahlen geteilt wird, welche so geführt werden, dass ein Teilstrahl als kollimierter Messstrahl in dem Messbereich bzw. Messvolumen auf den laufenden Faden gelenkt und von diesem abgeschattet wird und dass der andere Teilstrahl als Referenzstrahl an dem laufenden Faden vorbei und auf einen optischen Detektor geführt wird, wobei das vom Faden beeinflusste und/oder reflektierte Licht des Messstrahls mit dem Licht des Referenzstrahls überlagert wird, so dass die vom optischen Detektor nach dem Laser-Doppler-Anemometrie-Verfahren (LDA) erzeugten Messsignale zur Bestimmung der Geschwindigkeit und/oder der Länge des laufenden Fadens elektronisch ausgewertet werden können. Der an dem laufenden Faden vorbeigeführte Referenzstrahl kann dabei gleichwohl durch das Messvolumen oder aber an dem Messvolumen vorbei gelenkt werden.

Die Kollimierung bewirkt dabei, dass der Laserstrahl zumindest im Wesentlichen frei von Divergenzen und frei von Fokussierungen verläuft. Der so kollimierte Laserstrahl bietet den Vorteil, dass die Positionsabhängigkeit des Fadens bei der Erfassung sowohl des Garndurchmessers als auch der Garngeschwindigkeit über das LDA- Verfahren signifikant reduziert werden kann.

Das Verfahren ist dabei einfach durchzuführen und vermeidet die bei den bisher bekannten Verfahren möglichen, vor allem auf die Positionsabhängigkeit des Fadens zurückzuführenden Messfehler. Es gestattet daher eine exaktere Bestimmung der Geschwindigkeit bzw. Länge eines laufenden Fadens.

Besonders vorteilhaft ist es, wenn der vom Faden abgeschattete Messstrahl so geführt wird, dass er zumindest teilweise auf einen zweiten optischen Detektor trifft, und dass die von dem zweiten optischen Detektoren in Abhängigkeit von dem empfangenen Licht gelieferten Signale zur Bestimmung des Durchmessers des Fadens elektronisch ausgewertet werden. So kann der Durchmesser zusätzlich zur Geschwindigkeit und/oder Länge des laufenden Fadens ermittelt werden.

Besonders sichere Messergebnisse können dann erreicht werden, wenn der Durchmesser des Messstrahls größer oder zumindest gleich dem Nenndurchmesser bzw. Solldurchmesser des Fadens ist. So ist sichergestellt, dass eine vollständige Abschattung des Messstrahls ausgeschlossen ist.

Weiterhin ist es günstig, wenn der Referenzstrahl den gleichen Durchmesser aufweist, wie der Messstrahl, da hierbei die optische Teil- und Lenkeinrichtung besonders einfach ausgeführt werden kann.

Besonders vorteilhaft ist es ferner, wenn der Messstrahl in einer Ebene geführt wird, die parallel zu einer Ebene liegt, in welcher der Referenzstrahl geführt wird. Insbesondere kann der Messstrahl dabei auch absolut parallel zu dem Referenzstrahl geführt werden oder die beiden Strahlen können, wenn man sie aus einer Richtung betrachtet, die senkrecht zu den beiden parallelen Ebenen liegt, so verlaufen, dass sie in einem Winkel schräg zu einander verlaufen und sich kreuzen.

Besonders vorteilhaft ist außerdem eine Ausführung, bei welcher der Messstrahl gegenüber dem Referenzstrahl eine signifikant höhere Intensität aufweist. Einerseits wird damit eine genügend hohe Messempfindlichkeit für die Durchmessererfassung gesichert und andererseits erhöht die Intensitätsreduzierung des Referenzstrahls die Signalmodulationstiefe der LDA-Geschwindigkeitserfassung. Eine besonders vorteilhafte Intensitätsverteilung ist dabei 95% zu 5% für das Verhältnis Messstrahl zu Referenzstrahl.

Die vorliegende Erfindung betrifft ferner Anordnungen zur Durchführung der Verfahren der vorangehend beschriebenen Art. Eine dementsprechende Anordnung zum berührungslosen Bestimmen der Geschwindigkeit und/oder Länge eines laufenden Fadens im Fadenlauf einer Textilmaschine umfasst zumindest eine Laserquelle zur Erzeugung eines Laserstrahls, eine optische Einrichtung zur Kollimierung des Laserstrahls, eine optische Teil- und LenkEinrichtung, durch die der Laserstrahl in mindestens zwei kollimierte Teilstrahlen aufteilbar ist, von denen einer als kollimierter Messstrahl auf den Faden lenkbar ist, eine mindestens einen optischen Detektor aufweisende optische Sensoreinrichtung, mittels der aus dem vom laufenden Faden beeinflussten Licht Messsignale erzeugbar sind, sowie eine mit der Sensoreinrichtung verbundene Auswerteeinheit, welcher die Messsignale zur Bestimmung der Geschwindigkeit und/oder Länge des laufenden Fadens zuführbar sind.

Besonders vorteilhaft ist es dabei, wenn die optische Sensoreinrichtung mindestens zwei optische Detektoren umfasst, wobei auch der zweite optische Detektor mit einer Auswerteeinheit verbunden ist, welcher die Messsignale des zweiten optischen Detektors zur Bestimmung des Durchmessers des laufenden Fadens zuführbar sind.

Weitere Vorteile und Merkmale der Erfindung ergeben sich aus der nachfolgenden Beschreibung und den in den Zeichnungen dargestellten Ausführungsbeispielen.

Es zeigen:
- Figur 1:: schematische Darstellung einer Anordnung zur Durchführung einer ersten Ausführungsform des erfindungsgemäßen Verfahrens in einer Seitenansicht; und
- Figur 2:: schematische Darstellung einer Anordnung zur Durchführung einer zweiten Ausführungsform des erfindungsgemäßen Verfahrens in Seitenansicht.

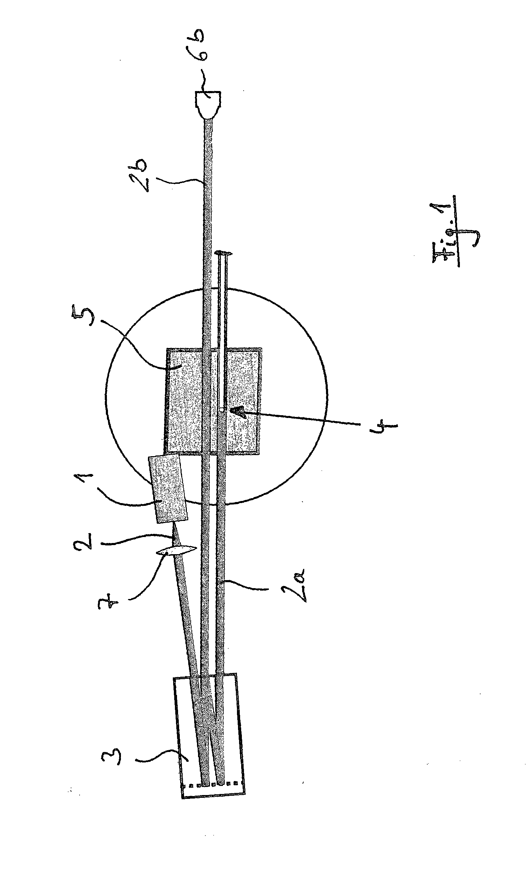

Bei dem in Figur 1 dargestellten erfindungsgemäßen Verfahren wird ein von einer Laserquelle 1 erzeugter Laserstrahl 2 durch eine optische Kollimiereinrichtung 7 derart kollimiert, dass er zumindest annähernd fokussierungsfrei und divergenzfrei weiter verläuft. Anschließend wird der so kollimierte Laserstrahl 2 an einer hier durch ein Keil-Prisma gebildeten optischen Teil- und Lenk-Einrichtung 3 in zwei Teilstrahlen 2a und 2b aufgeteilt. Die beiden Teilstrahlen 2a und 2b werden so gelenkt, dass sie parallel zueinander verlaufen und nicht mehr am Garn bzw. am laufenden Faden 4 zusammengeführt werden. Beide Teilstrahlen 2a und 2b werden durch ein Messvolumen 5 hindurch geführt, welches auch von dem Faden 4 durchquert wird.

Der erste Teilstrahl bildet hierbei den Messstrahl 2a, der auf den Faden 4 gelenkt wird. Der nicht vom Faden 4 abgeschattete Restanteil des Messstrahls 2a wird hier nicht weiter benötigt. Der zweite Teilstrahl bildet den Referenzstrahl 2b, der am Faden vorbei gelenkt wird und hinter dem Messvolumen 5 auf den Detektor 6b trifft. Die Intensitätsverluste des Referenzstrahles 2b sind hierbei minimal, da kein Faden im Strahlengang vorhanden ist, was zu einer Verbesserung der Signalintensität am Detektor 6b führt. Auf diese Weise kann auch die Fehlerlänge des Garns bzw. des laufenden Fadens 4 hochdynamisch erfasst werden.

Hier wird der Effekt der Wellenüberlagerung (also das Entstehen des Dopplersignals) aufgrund der gestreuten Kugelwellen des auf dem Faden 4 auftreffenden Messstrahls 2a mit dem Referenzstrahl 2b erzeugt. Dabei besitzt der Messstrahl 2a mindestens den Durchmesser des Fadens 4.

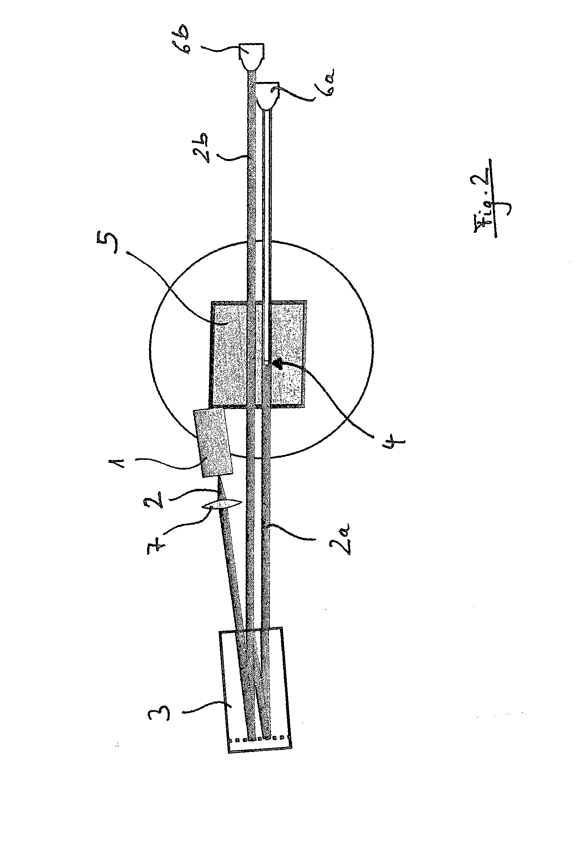

Bei der in Figur 2 gezeigten Ausführungsvariante wird auch der nicht vom Faden 4 abgeschattete Anteil des Messstrahls 2a in einen optischen Detektor 6a gelenkt. Dieser Detektor 6a misst somit die Abschattung des Messstrahls 2a durch das Garn bzw. durch den laufenden Faden 4. Die von diesem Detektor 6a gelieferten Signale werden zur Ermittlung des Durchmessers des Garns bzw. des laufenden Fadens 4 ausgewertet.

## Patentansprüche

1. Verfahren zum berührungslosen Bestimmen der Geschwindigkeit und/oder der Länge eines laufenden Fadens (4) mittels einer im Fadenlauf einer Textilmaschine angeordneten optischen Sensoreinrichtung mit mindestens einem optischen Detektor (6b), umfassend die folgenden Verfahrensschritte:
- der Faden (4) wird durch ein Messvolumen (5) hindurchgeführt,
- von einer Laserquelle (1) wird ein Laserstrahl (2) erzeugt,
- der Laserstrahl wird mittels einer optischen Einrichtung (7) kollimiert,
- der Laserstrahl (2) wird mittels einer optischen Teil- und LenkEinrichtung (3) zur Teilung und Lenkung des Laserstrahls (2) in mindestens zwei Teilstrahlen (2a, 2b) geteilt,
- die beiden Teilstrahlen werden so geführt, dass ein Teilstrahl als Messstrahl (2a) in dem Messvolumen (5) auf den Faden (4) gelenkt und von diesem abgeschattet wird und der andere Teilstrahl als Referenzstrahl (2b) an dem Faden (4) vorbei und auf einen optischen Detektor (6b) geführt wird,
- das vom Faden (4) beeinflusste und/oder reflektierte Licht des Messstrahls (2a) wird mit dem Licht des Referenzstrahls (2b) überlagert,
- die vom optischen Detektor (6b) nach dem Laser-Doppler-Anemometrie-Verfahren erzeugten Messsignale werden zur Bestimmung der Geschwindigkeit und/oder der Länge des laufenden Fadens (4) elektronisch ausgewertet.
**dadurch gekennzeichnet,**
**dass** der kollimierte Laserstrahl (2) mittels der optischen Teil- und LenkEinrichtung (3) in mindestens zwei kollimierte Teilstrahlen (2a, 2b) geteilt wird, von denen einer als kollimierter Messstrahl (2a) auf den Faden (4) gelenkt wird.

2. Verfahren nach Anspruch 1,**dadurch gekennzeichnet, dass** der vom Faden (4) abgeschattete Messstrahl (2a) so geführt wird, dass er zumindest teilweise auf einen optischen Detektor (6a) trifft, und dass das von diesem Detektor (6a) in Abhängigkeit von dem empfangenen Licht gelieferte Signal zur Bestimmung des Durchmessers des Fadens (4) elektronisch ausgewertet wird.

3. Verfahren nach Anspruch 1 oder 2, **dadurch gekennzeichnet, dass** der Durchmesser des Messstrahls (2a) mindestens den Durchmesser des Fadens (4) aufweist.

4. Verfahren nach einem der Ansprüche 1 bis 3, **dadurch gekennzeichnet, dass** der Durchmesser des Messstrahls (2a) und der Durchmesser des Referenzstrahls (2b) gleichgroß sind.

5. Verfahren nach einem der vorherigen Ansprüche, **dadurch gekennzeichnet, dass** der Messstrahl (2a) in einer Ebene geführt wird, die parallel zu einer Ebene liegt, in welcher der Referenzstrahl (2b) geführt wird.

6. Verfahren nach einem der vorherigen Ansprüche, **dadurch gekennzeichnet, dass** die Intensität des Messstrahls (2a) um ein Vielfaches höher ist als die Intensität des Referenzstrahls (2b).

7. Verfahren nach Anspruch 6, **dadurch gekennzeichnet, dass** die Intensität des Messstrahls (2a) zehnfach bis zwanzigfach so hoch ist wie die Intensität des Referenzstrahls (2b).

8. Anordnung (A) zur Durchführung des Verfahrens nach einem der Ansprüche 1 bis 7, umfassend eine Laserquelle (1) zur Erzeugung eines Laserstrahls (2), eine optische Einrichtung (7) zur Kollimierung des Laserstrahls (2), eine optische Teil- und Lenk-Einrichtung (3), durch die der Laserstrahl (2) in mindestens zwei Teilstrahlen (2a, 2b) aufteilbar ist, eine mindestens einen optischen Detektor (6b) aufweisende optische Sensoreinrichtung, mittels der aus dem vom laufenden Faden (4) beeinflussten Licht Messsignale erzeugbar sind, die einer mit der Sensoreinrichtung verbundenen Auswerteeinheit zur Bestimmung der Geschwindigkeit und/oder der Länge des laufenden Fadens (4) zuführbar sind,
**dadurch gekennzeichnet,**
**dass** der kollimierte Laserstrahl (2) mittels der optischen Teil- und LenkEinrichtung (3) in mindestens zwei kollimierte Teilstrahlen (2a, 2b) aufteilbar ist, von denen einer als kollimierter Messstrahl (2a) auf den Faden (4) lenkbar ist.

9. Anordnung (A) nach Anspruch 8, **dadurch gekennzeichnet, dass** die optische Sensoreinrichtung einen zweiten optischen Detektor (6a) umfasst, dessen Messsignale einer Auswerteeinheit zur Bestimmung des Durchmessers des laufenden Fadens (4) zuführbar sind.

## Claims

1. A method for the contactless determination of the speed and/or the length of a running thread (4) by means of an optical sensor device disposed in the run of thread of a textile machine with at least one optical detector (6b), comprising the following method steps:
- the thread (4) is guided through a measurement volume (5),
- a laser beam (2) is generated by a laser source (1),
- the laser beam is collimated by means of an optical device (7),
- the laser beam (2) is split into at least two sub-beams (2a, 2b) by means of an optical splitting and guiding device (3) for splitting and guiding the laser beam (2),
- the two sub-beams are guided in such a way that one sub-beam is guided as a measurement beam (2a) in the measurement volume (5) onto the thread (4) and occluded by the latter and the other sub-beam is guided as a reference beam (2b) past the thread (4) and onto an optical detector (6b),
- the light of the measurement beam (2a) influenced and/or reflected by the thread (4) is superimposed with the light of the reference beam (2b),
- the measurement signals generated by the optical detector (6b) according to the laser Doppler anemometry method are evaluated electronically to determine the speed and/or the length of the running thread (4),
**characterised in that**
the collimated laser beam (2) is split by means of the optical splitting and guiding device (3) into at least two collimated sub-beams (2a, 2b), one of which is guided as a collimated measurement beam (2a) onto the thread (4).

2. The method according to claim 1, **characterised in that** the measurement beam (2a) occluded by the thread (4) is guided in such a way that it at least partially strikes an optical detector (6a), and that the signal delivered by this detector (6a) as a function of the received light is evaluated electronically in order to determine the diameter of the thread (4).

3. The method according to claim 1 or 2, **characterised in that** the diameter of the measurement beam (2a) has at least the diameter of the thread (4).

4. The method according to any one of claims 1 to 3, **characterised in that** the diameter of the measurement beam (2a) and the diameter of the reference beam (2b) are equal in size.

5. The method according to any one of the preceding claims, **characterised in that** the measurement beam (2a) is guided in a plane which lies parallel to a plane in which the reference beam (2b) is guided.

6. The method according to any one of the preceding claims, **characterised in that** the intensity of the measurement beam (2a) is many times higher than the intensity of the reference beam (2b).

7. The method according to claim 6, **characterised in that** the intensity of the measurement beam (2a) is ten times to twenty times as high as the intensity of the reference beam (2b).

8. An arrangement (A) for performing the method according to any one of claims 1 to 7, comprising a laser source (1) for generating a laser beam (2), an optical device (7) for collimating the laser beam (2), an optical splitting and guiding device (3), by means of which the laser beam (2) can be split into at least two sub-beams (2a, 2b), an optical sensor device comprising at least one optical detector (6b), by means of which measurement signals can be generated from the light influenced by the running thread (4), said measurement signals being able to be fed to an evaluation unit for determining the speed and/or the length of the running thread (4), said evaluation unit being connected to the sensor device,
**characterised in that**
the collimated laser beam (2) can be split by means of the optical splitting and guiding device (3) into at least two collimated sub-beams (2a, 2b), one of which can be guided as a collimated measurement beam (2a) onto the thread (4).

9. The arrangement (A) according to claim 8, **characterised in that** the optical sensor device comprises a second optical detector (6a), the measurement signals whereof can be fed to an evaluation unit for determining the diameter of the running thread (4).

## Revendications

1. Procédé destiné à déterminer sans contact la vitesse et/ou la longueur d'un fil (4) déroulant au moyen d'un système optique de capteurs disposé dans le trajet de fil d'une machine textile, avec au moins un détecteur optique (6b), comprenant les étapes de procédé suivantes :
- on fait passer le fil (4) à travers un volume de mesure (5),
- une source laser (1) génère un faisceau laser (2),
- le faisceau laser est collimaté au moyen d'un système optique (7),
- le faisceau laser (2) est divisé à l'aide d'un système de division et de guidage (3) pour la division et le guidage du faisceau laser (2) en au moins deux faisceaux partiels (2a, 2b,
- les deux faisceaux partiels sont guidés de sorte qu'un faisceau partiel soit guidé en tant que faisceau de mesure (2a) dans le volume de mesure (5) sur le fil (4) et occulté par ce dernier et que l'autre faisceau partiel soit guidé en tant que faisceau de référence (6b) pour passer devant le fil (4) puis sur un détecteur optique (6b),
- on superpose à la lumière du faisceau de mesure (2a), influencée et/ou réfléchie par le film (4) la lumière du faisceau de référence (2b),
- les signaux de mesure générés par le détecteur optique (6b) selon le procédé d'anémométrie laser Doppler sont évalués par électronique pour la détermination de la vitesse et/ou de la longueur du fil (4) déroulant,
**caractérisé en ce**
**que** le faisceau laser (2) collimaté est divisé au moyen du système optique de division et de guidage (3) en au moins deux faisceaux laser (2a, 2b) partiels collimatés, dont l'un est guidé en tant que faisceau de mesure collimaté (2a) sur le fil (4).

2. Procédé selon la revendication 1, **caractérisé en ce que** le faisceau de mesure (2a) occulté par le fil (4) est guidé de sorte qu'il atteigne au moins en partie un détecteur optique (6a) et **en ce que** le signal fourni par ledit détecteur (6a) en fonction de la lumière réceptionnée soit évalué par électronique pour la détermination du diamètre du fil (4).

3. Procédé selon la revendication 1 ou la revendication 2, **caractérisé en ce que** le diamètre du faisceau de mesure (2a) présente au moins le diamètre du fil (4).

4. Procédé selon l'une quelconque des revendications 1 à 3, **caractérisé en ce que** le diamètre du faisceau de mesure (2a) et le diamètre du faisceau de référence (2b) sont de dimension identique.

5. Procédé selon l'une quelconque des revendications précédentes, **caractérisé en ce que** le faisceau de mesure (2a) est guidé dans un plan qui est parallèle à un plan dans lequel est guidé le faisceau de référence (2b).

6. Procédé selon l'une quelconque des revendications précédentes, **caractérisé en ce que** l'intensité du faisceau de mesure (2a) est supérieur d'un multiple à l'intensité du faisceau de référence (2b).

7. Procédé selon la revendication 6, **caractérisé en ce que** l'intensité du faisceau de mesure (2a) correspond à de dix à vingt fois l'intensité du faisceau de référence (2b).

8. Agencement (A) destiné à réaliser le procédé selon l'une quelconque des revendications 1 à 7, comprenant une source laser (1) pour générer un faisceau laser (2), un système optique (7) pour collimater le faisceau laser (2), un système optique de division et de guidage (3), à l'aide duquel le faisceau laser (2) peut être divisé en au moins deux faisceau partiels (2a, 2b), un système optique de capteurs comportant au moins un détecteur (6b) optique, au moyen duquel peuvent être générés à partir de la lumière influencée par le fil (4) déroulant des signaux de mesure qui peuvent être amenés vers une unité d'évaluation reliée au système de capteurs, pour la détermination de la vitesse et/ou de la longueur du fil (4) déroulant,
**caractérisé en ce que**
le faisceau laser (2) collimaté peut être divisé au moyen du système optique de division et de guidage (3) en au moins deux faisceaux laser (2a, 2b) partiels collimatés, dont l'un peut être guidé en tant que faisceau de mesure collimaté (2a) sur le fil (4).

9. Agencement (A) selon la revendication 8, **caractérisé en ce que** le système optique de capteurs comprend un deuxième détecteur optique (6a) dont les signaux de mesure peuvent être amenés vers une unité d'évaluation pour la détermination du diamètre du fil (4) déroulant.
